# EUROPÄISCHE PATENTSCHRIFT

(11) **EP 1 558 037 B1**
(45) Veröffentlichungstag und Bekanntmachung des Hinweises auf die Patenterteilung: **20.01.2010**
(21) Anmeldenummer: 04026994.6
(22) Anmeldetag: 12.11.2004
(51) Int. Cl.: H04N 7/24, G06F 17/30, G06F 17/21

(54) **Verfahren zur Übertragung und Ausführung von Anwendungen auf Endgeräten**
Method for transmission and execution of applications on end devices
Procédé pour la transmission et l'exécution d'applications sur des terminaux

(30) Priorität: 23.01.2004 DE 102004003416
(43) Veröffentlichungstag der Anmeldung: 27.07.2005
(73) Patentinhaber: ROBERT BOSCH GMBH, 70442 Stuttgart (DE)
(72) Erfinder: Koch, Hartwig, 31139 Hildesheim (DE); May, Thomas, 38302 Wolfenbuettel (DE)

(56) Entgegenhaltungen:
- EP-A- 1 315 101
- US-A- 6 023 714
- US-A1- 2002 010 716

## Beschreibung

Die vorliegende Erfindung betrifft ein Verfahren zur Übertragung und Ausführung von softwarebasierten Anwendungen auf Endgeräten, wobei die Anwendungen in einer Anwendungsumgebung, insbesondere einem Application Manager, ablauffähig sind, wobei die Anwendungen in Form eines Datenstroms mittels eines digitalen Übertragungsverfahrens an Endgeräte übertragbar sind, und wobei die Anwendungen aus einem ersten, endgeräteunspezifischen Funktionsteil und mindestens einem zweiten, endgerätespezifischen Darstellungs- und Eingabeteil bestehen, der in verschiedenen Versionen für jedes vorgesehene Endgerät übertragen wird, und das Endgerät denjenigen zweiten, endgerätespezifischen Darstellungs- und Eingabeteil auswählt, der für das Endgerät vorgesehen ist um die Information des ersten, endgeräteunspezifischen Funktionsteils auszuführen.

### Stand der Technik

Aus der EP 1315 101 A2 ist ein Verfahren und eine Vorrichtung bekannt, mittels der Daten erzeugt werden, die geeignet sind an eine Datenempfangseinrichtung zu senden wobei die Daten in eine erste Portion und eine zweite Portion aufgeteilt sind, wobei die erste Portion formatunabhängig ist und die zweite Portion die Formatierung für die in der ersten Portion spezifizierte, plattformunabhängige Weise enthält, womit die zweite Portion der Daten in einer ersten Transformation umgewandelt wird, wodurch eine plattformabhängige Portion an Daten erzeugt wird, die Formatierung in der plattformabhängigen Weise enthält. Diese Daten werden mit den plattformunabhängigen Daten der ertsen Portion kombiniert indem eine zweite Transformation durchgeführt wird um die Daten der Datenempfanhseinrichtung zuzusenden.

Aus der US 6,023,714 ist ein Verfahren und ein System zur dynamischen Anpassung der Darstellung eines Dokuments an eine spezielle Ausgabeeinrichtung dargestellt. Die Darstellung des Dokuments kann so angepasst werden, dass das Dokument die Möglichkeiten der Ausgabeeinrichtung vollständig ausnutzt. Hierzu untersucht der Darstellungsgenerator die Ausgabeeinrichtung um deren Darstellungsfähigkeiten zu bestimmen. In Abhängigkeit der Darstellungsfähigkeiten der Ausgabeeinrichtung wählt der Darstellungsgenerator eine Formatvorlage aus um die spezielle Ausgabeeinrichtung anzupassen.Die Formatvorlage bestimmt Werte bezüglich Größenvorgaben wie beispielsweise Schriftgrößen, Farben, Hintergrundeigenschaften und Texteigenschaften.

Aus der ETSI-Standardisierung ETSI TS 101 993 ist die Übertragung von Xlets mittels Digital Audio Broadcast (DAB)-Übertragungsverfahren bekannt. Danach bestehen Xlets aus einem oder mehreren zusammengehörigen Java-Archivdateien und werden in Form von Multimedia Object Transport (MOT)-Objekten übertragen. Die MOT-Objekte dienen dabei der Strukturierung der Daten während der Übertragung und enthalten auch eine Kennzeichnung, die darauf hinweist, dass es sich bei dem Inhalt um ein Xlet handelt.

Damit lässt sich ein Xlet für DAB nur mit einem Endgerät, das fest definierte Benutzerschnittstellen aufweist, implementieren, da unterschiedliche Endgeräte, beispielsweise unterschiedliche Anzeigeeinrichtungen, Eingabegeräte wie Tastaturen oder Computermäuse, aufweisen. Zwar ist es möglich, die Bildauflösung der darzustellenden Information der Xlets an unterschiedliche Bildgrößen anpassen, jedoch treten hierbei Verzerrungen und Unleserlichkeiten bei der Darstellung von Text auf. Weiterhin ist es nicht möglich, bestimmte Benutzerschnittstellen wie Touchscreens oder virtuelle Tastaturen, wie Sie von Taschen-PCs (PDAs) unterstützt werden zu verwenden, wenn hierfür nicht spezielle Schnittstelleninformation verfügbar ist, wenn das Xlet beispielsweise ursprünglich für einen Desktop-PC konzipiert wurde. Eine Möglichkeit diesen Nachteil zu überwinden, wäre es, für sämtliche, möglichen Endgeräte jeweils ein Xlet zu übertragen, wobei hierzu eine Vielzahl von Xlets übertragen werden müsste, die alle einen identischen Funktionsteil aufweisen und sich lediglich bezüglich der Daten hinsichtlich der Ein- und Ausgabeeinrichtungen unterscheiden.

### Kern und Vorteile der Erfindung

Um die Probleme des beschriebenen Standes der Technik überwinden zu können, wird erfindungsgemäß ein Verfahren vorgeschlagen, bei dem Anwendungen in zwei Teile aufgeteilt werden, wobei der erste Teil ein endgeräteunspezifischer Funktionsteil und ein zweiter, endgerätespezifischer Teil zur Darstellung und Bedienung vorgesehen ist. Dieser zweite, endgerätespezifische Darstellungs- und Eingabeteil ist nach einem von mehreren Userinterfaceprofilen implementiert, die die Ein- und Ausgabemöglichkeiten bestimmter Endgerätetypen berschreiben. Nur dieser Darstellungs- und Eingabeteil ist endgerätespezifisch und wird in mehreren Versionen übertragen, von denen das Endgerät die passende aussucht. Der erste, endgeräteunspezifische Funktionsteil enthält demnach Informationen der Anwendung, die im Zusammenhang mit den endgerätespezifischen Darstellungs- und Eingabeteilen auf jedem vorgesehenen Endgerät ablauffähig sind. Erfindungsgemäß wird dieses durch die Merkmale des unabhängigen Anspruchs gelöst. Vorteilhafte Weiterbildungen und Ausgestaltungen ergeben sich aus den Unteransprüchen.

Vorteilhafterweise enthält der zweite, endgerätespezifische Darstellungs- und Eingabeteil Informationen für unterschiedliche Ausgabeeinrichtungen der Endgeräte und/oder Informationen für unterschiedliche Eingabevorrichtungen der Endgeräte.

Weiterhin ist es vorteilhaft, dass als unterschiedlichen Ausgabeeinrichtungen Lautsprecher, Segmentanzeige, einfarbige und/oder mehrfarbige LCD-Punktanzeigen unterschiedlicher Auflösungen und/oder Bildschirme vorgesehen sind.

Weiterhin ist es vorteilhaft, dass die Eingabeeinrichtungen Tastaturen, virtuelle Tastaturen wie sie von tragbaren Taschencomputern (PDA) bekannt sind, Touchscreens, Computermäuse, Trackballs und/oder Spracherkennungen sind.

Weiterhin ist es vorteilhaft, dass es sich bei dem digitalen Übertragungsverfahren um ein orthogonales Mehrträgerübertragungsverfahren handelt, beispielsweise um ein Digital Audio Broadcast (DAB)-System und/oder ein Digital Video Broadcast (DVB)-System handelt. Vorteilhafterweise kann das digitale Übertragungsverfahren auch ein Code-Division-Multiple-Accsess (CDMA)-Verfahren sein und beispielsweise als Universal-Mobile-Telecommunications-System (UMTS)-System ausgeführt sein. Weiterhin ist es möglich, dass das digitale Übertragungsverfahren ein Zeitschlitz-Übertragungsverfahren (TDMA) wie beispielsweise das GSM-Übertragungsverfahren ist.

Weiterhin ist es vorteilhaft, dass es sich bei den Anwendungen um javabasierte Xlets handelt.

Weiterhin ist es vorteilhaft, dass es sich bei den Endgeräten um ein Radio, insbesondere ein Autoradio, ein Navigationsgerät, einen tragbaren Taschencomputer, insbesondere einen Personal-Digital-Assistent (PDA), ein Mobiltelefon oder einen Personal-Computer handelt.

Weiterhin ist es vorteilhaft, dass der Datenstrom ein Multimedia-Object-Transport (MOT)-Datenstrom ist.

### Zeichnungen

Nachfolgend werden Ausführungsbeispiele der Erfindung anhand von Zeichnungen erläutert. Es zeigen
- Figur 1: ein Blockdiagramm des erfindungsgemäßen Verfahrens und
- Figur 2: ein Ablaufdiagramm zur Durchführung des erfindungsgemäßen Verfahrens.

### Beschreibung von Ausführungsbeispielen

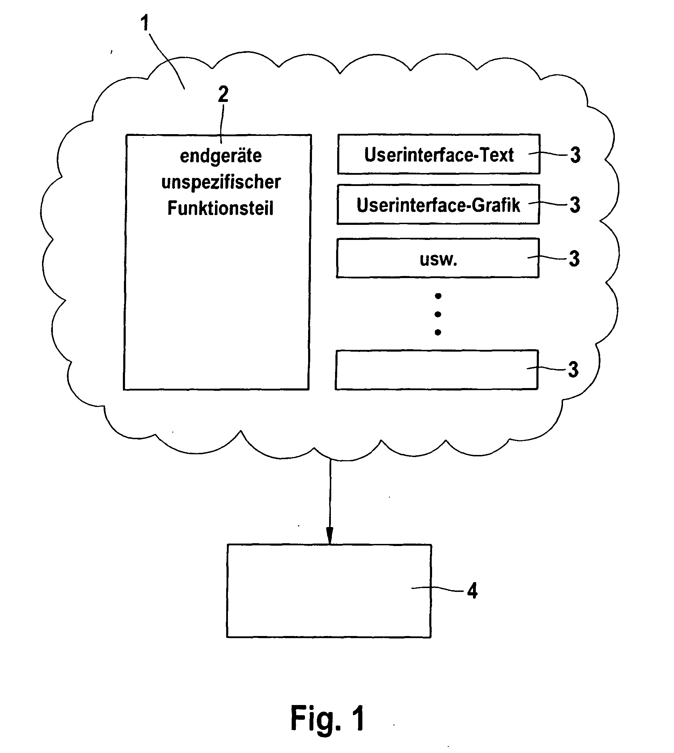

Der Empfänger des Endgerätes empfängt mittels einer Antenne das digitale Übertragungssignal und führt im Falle einer digitalen Mehrträgerübertragung in einem nicht dargestellten Demodulator eine Demodulation des digitalen Signals durch. Danach wird das demodulierte Signal in einem Decoder decodiert und der somit gewonnene Multimedia-Object-Transport (MOT)-Datenstrom beispielsweise einem Prozessor zugeführt. In diesem MOT-Datenstrom sind die in Figur 1 dargestellten MOT-Objekte 2 und 3 enthalten und wird von der Anwendungsumgebung, die in dem Endgerät vorgesehen ist, erkannt. Hierbei kann die Anwendungsumgebung beispielsweise ein Application-Manager einer softwareunabhängigen Programmiersprache wie beispielsweise Java sein. Der MOT-Datenstrom 1 enthält erfindungsgemäß einen ersten, endgeräteunspezifischen Funktionsteil 2 als MOT-Objekt, der die auszuführenden Informationen ohne endgerätespezifische Daten umfasst. Weiterhin enthält der MOT-Datenstrom 1 endgerätespezifische Darstellungsteile 3 als MOT-Objekte, die Informationen 3 für im Endgerät vorgesehene Ein- und Ausgabeeinrichtungen umfassen. Hierbei kann eine endgerätespezifische Ausgabeinformation 3 beispielsweise für die Ausgabe eines Xlets auf einem Display eines Autoradios vorgesehen sein, das zur Informationsausgabe eine Segmentanzeige vorsieht. Eine weitere endgerätespezifische Ausgabeinformation 3 kann beispielsweise für die Ausgabe von Information auf einem graphischen Display eines Personal-Digital-Assistant (PDA) vorgesehen sein, wobei verschiedene endgerätespezifische Ausgabeinformationen 3 für einfarbige oder mehrfarbige LCD-Anzeigen vorgesehen sein können. Weitere vorstellbare Ausgabeeinrichtungen können beispielsweise Lautsprecher, Bildschirme von PCs mit unterschiedlichen Auflösungen oder Anzeigevorrichtungen von Navigationsgeräten sein, für die jeweils eine eigene, endgerätespezifische Ausgabeinformation 3 vorgesehen ist. Weiterhin sind endgerätespezifische Eingabeteile 3 mit Eingabeeinrichtungsinformationen 4 vorhanden, beispielsweise für die Tastenbelegungen eines Personal-Digital-Assistant, die Tastatur eines PCs, die Maus eines PCs, die Eingabetasten eines Navigationsgeräts, eine virtuelle Tastatur eines PDAs oder die Eingabetasten eines Navigationssystems. Die Benutzerschnittstelle des Endgeräts 4 wählt aus den endgerätespezifischen Darstellungs- und Eingabeteilen 3 des MOT-Objekts 1 die endgerätespezifischen Ein- und Ausgabeinformationen 3 aus, die in dem Endgerät 4 realisiert sind. Handelt es sich bei dem Endgerät beispielsweise um einen als PDA bezeichneten Taschencomputer mit farbigem LCD-Punktdisplay, so werden die endgerätespezifischen Ein- und Ausgabeinformationen 4 aus den endgerätespezifischen Darstellungsteilen übernommen, die für den ordnungsgemäßen Ablauf der Anwendung des endgeräteunspezifischen Funktionsteils 2 auf dem entsprechenden Display notwendig sind. Weiterhin werden die endgerätespezifischen Ein- und Ausgabeinformationen 3 aus den endgerätespezifischen Eingabeteilen übernommen, mittels dem Eingaben mit den Tasten des Taschencomputers möglich sind. Im Fall, dass es sich bei dem Endgerät um ein Autoradio handelt, werden aus dem endgerätespezifischen Darstellungs- und Eingabeteil die endgerätespezifischen Ausgabeinformationen 4 übernommen, mittels denen die übertragene Anwendung, die durch den endgeräteunspezifischen Funktionsteil 2 enthalten sind, auf der Segmentanzeige des Autoradios angezeigt werden können .Im Falle eines Autoradios als Endgerät ist es beispielsweise denkbar, dass keine Eingabe seitens des Benutzers vorgesehen ist, so dass in diesem Fall auch keine endgerätespezifische Eingabeeinrichtungsinformation 4 übernommen werden muss.

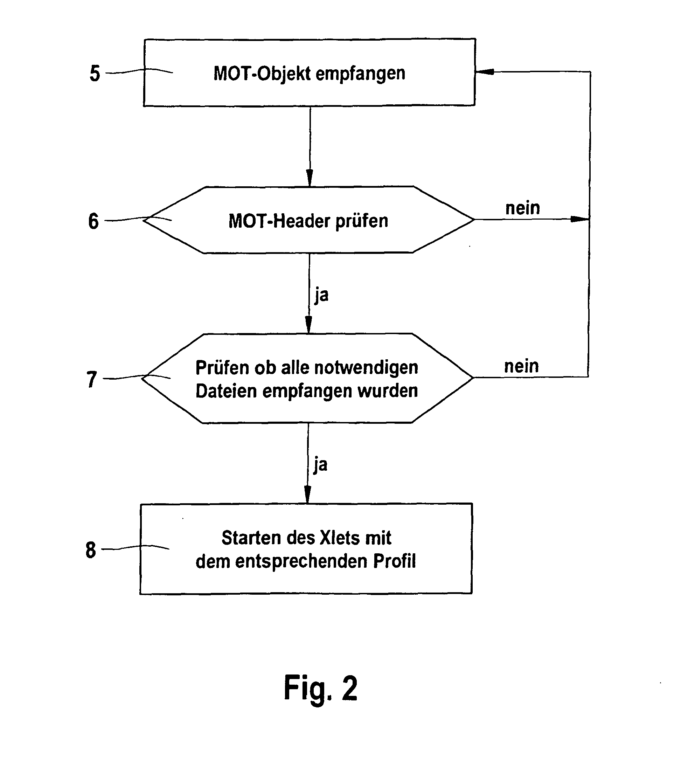

In Figur 2 ist ein Ablaufdiagramm des erfindungsgemäßen Verfahrens dargestellt. Gemäß Schritt 5 des Ablaufdiagramms wird das Multimedia-Objekt-Transport (MOT)-Objekt mit seinem Header empfangen. Ist diese Information im Mikroprozessor des Empfängers angekommen, so wird in Schritt 6 der Header des MOT-Objekts geprüft, um festzustellen, um welche Art es sich bei dem empfangenen Objekt handelt. Handelt es sich bei dem in Schritt 7 erkannten MOT-Objekt um einen Teil eines erfindungsgemäßen Xlets, der entweder geräteunspezifisch ist oder gerätespezifisch ist und das zum Endgerät passende Userinterfaceprofil hat, so verzweigt Schritt 6 nach "Ja" zu Schritt 7. Wird in Schritt 6 festgestellt, dass diese Bedingung nicht erfüllt ist, so verzweigt Schritt 6 nach "Nein" und das Ablaufdiagramm kehrt nach Block 5 zurück. In Block 7 wird geprüft, ob alle notwendigen Dateien empfangen wurden. Ist dies nicht der Fall, so verzweigt Block 7 nach "Nein" und das Verfahren wird in Schritt 5 fortgeführt. Wird in Schritt 7 festgestellt, dass alle notwendigen Dateien empfangen wurden, so verzweigt das Diagramm nach "Ja" zu Schritt 8, in dem das Xlet mit den entsprechenden Profilen gestartet wird.

## Patentansprüche

1. Verfahren zur Übertragung und Ausführung von Anwendungen (1) auf Endgeräten, wobei die Anwendungen in einer Anwendungsumgebung, insbesondere einem Application Manager, ablauffähig sind, wobei die Anwendungen in Form eines Datenstroms mittels eines digitalen Übertragungsverfahrens an Endgeräte übertragbar sind, dass die Anwendungen (1) aus einem ersten, endgeräteunspezifischen Funktionsteil (2) und mindestens einem zweiten, endgerätespezifischen Darstellungs- und Eingabeteil (3) bestehen, der in verschiedenen Versionen für jedes vorgesehene Endgerät (4) übertragen wird, **dadurch gekennzeichnet, dass** die Versionen des zweiten, endgerätespezifischen Darstellungs- und Eingabeteils (3) Informationen für unterschiedliche Eingabevorrichtungen der Endgeräte (4) enthalten und das Endgerät (4) denjenigen zweiten, endgerätespezifischen Darstellungs- und Eingabeteil (3) auswählt, der für das Endgerät (4) vorgesehen ist um die Information des ersten, endgeräteunspezifischen Funktionsteils (2) auszuführen.

2. Verfahren nach Anspruch 1, **dadurch gekennzeichnet, dass** die Eingabeeinrichtungen Tastaturen, virtuelle Tastaturen, Touchscreens, Computermäuse, Trackballs und/oder Spracherkennungen sind.

3. Verfahren nach einem der vorhergehenden Ansprüche, **dadurch** gekennnzeichnet, dass es sich bei dem digitalen Übertragungsverfahren um ein orthogonales Mehrträgerübertragungsverfahren handelt, insbesondere um Digital Audio Broadcast (DAB) und/oder Digital Video Broadcast (DVB) handelt.

4. Verfahren nach einem der Ansprüche 1 bis 3, **dadurch** gekennnzeichnet, dass es sich bei dem digitalen Übertragungsverfahren um ein Code Divison Multiple Access (CDMA)- Verfahren, insbesondere um das Universal Mobile Telecommunications System (UMTS)- System handelt.

5. Verfahren nach einem der Ansprüche 1 bis 3, **dadurch** gekennnzeichnet, dass es sich bei dem digitalen Übertragungsverfahren um ein Time Division Multiple Access (TDMA)-Verfahren, insbesondere um ein GSM-System handelt.

6. Verfahren nach vorhergehenden Ansprüche, **dadurch** gekennnzeichnet, dass es sich bei den Anwendungen (1) um javabasierte Xlets handelt.

7. Verfahren nach einem der vorhergehenden Ansprüche, **dadurch** gekennnzeichnet, dass es sich bei den Endgeräten (4) um ein Radio, insbesondere ein Autoradio, ein Navigationsgerät, einen tragbaren Taschencomputer, insbesondere eine Personal Digital Assistant (PDA), ein Mobiltelefon oder einen Personal Computer (PC) handelt.

8. Verfahren nach einem der vorhergehenden Ansprüche, **dadurch** gekennnzeichnet, dass der Datenstrom ein Multimedia Object Transport (MOT)-Datenstrom ist.

## Claims

1. Method for transmitting and executing applications (1) on terminals, wherein the applications can be executed in an application environment, particularly an application manager, wherein the applications can be transmitted to terminals in the form of a data stream by means of a digital transmission method, wherein the applications (1) comprise a first, non-terminal-specific functional part (2) and at least one second, terminal-specific presentation and input part (3) which is transmitted in different versions for each intended terminal (4), **characterized in that** the versions of the second, terminal-specific presentation and input part (3) contain information for various input apparatuses of the terminals (4), and the terminal (4) selects that second, terminal-specific presentation and input part (3) which is intended for the terminal (4) in order to implement the information of the first, non-terminal-specific functional part (2).

2. Method according to Claim 1, **characterized in that** the input devices are keyboards, virtual keyboards, touch screens, computer mice, trackballs and/or voice recognition units.

3. Method according to one of the preceding claims, **characterized in that** the digital transmission method is an orthogonal multicarrier transmission method, particularly Digital Audio Broadcasting (DAB) and/or Digital Video Broadcasting (DVB).

4. Method according to one of Claims 1 to 3, **characterized in that** the digital transmission method is a Code Division Multiple Access (CDMA) method, particularly the Universal Mobile Telecommunications System (UMTS).

5. Method according to one of Claims 1 to 3, **characterized in that** the digital transmission method is a Time Division Multiple Access (TDMA) method, particularly a GSM system.

6. Method according to the preceding claims, **characterized in that** the applications (1) are Java-based Xlets.

7. Method according to one of the preceding claims, **characterized in that** the terminals (4) are a radio, particularly a car radio, a navigation appliance, a portable hand-held computer, particularly a Personal Digital Assistant (PDA), a mobile phone or a Personal Computer (PC).

8. Method according to one of the preceding claims, **characterized in that** the data stream is a Multimedia Object Transport (MOT) data stream.

## Revendications

1. Procédé de transfert et d'exécution d'applications (1) sur des terminaux,
les applications pouvant se dérouler dans un environnement d'application et en particulier dans un gestionnaire d'application,
les applications pouvant être transmises aux terminaux sous la forme d'un flux de données au moyen d'un procédé de transfert numérique,
les applications (1) étant constituées d'une première partie fonctionnelle (2) non spécifique au terminal et d'au moins une deuxième partie de présentation et d'introduction (3) spécifique au terminal et transmise en différentes versions pour chaque terminal (4) prévu,
**caractérisé en ce que**
les versions de la deuxième partie de présentation et d'introduction (3) spécifiques au terminal contiennent des informations concernant les différents dispositifs d'introduction des terminaux (4) et
**en ce que** le terminal (4) sélectionne la partie de présentation et d'introduction (3) spécifique au terminal prévue pour le terminal (4) pour exécuter les informations de la première partie fonctionnelle (2) non spécifique au terminal.

2. Procédé selon la revendication 1, **caractérisé en ce que** les dispositifs d'introduction sont un clavier, un clavier virtuel, un écran tactile, une souris d'ordinateur, une bille suiveuse et/ou une reconnaissance vocale.

3. Procédé selon l'une des revendications précédentes, **caractérisé en ce que** le procédé de transfert numérique est un procédé de transfert à plusieurs porteuses orthogonales, en particulier une diffusion numérique audio (DAB - "Digital Audio Broadcast") et/ou une diffusion vidéo numérique (DVB - "Digital Video Broadcast").

4. Procédé selon l'une des revendications 1 à 3, **caractérisé en ce que** le procédé numérique de transfert est un procédé d'accès multiple à division par code (CDMA - "Code Divison Multiple Access"), en particulier le système universel de télécommunication mobile (UMTS - "Universal Mobile Telecommunications System").

5. Procédé selon l'une des revendications 1 à 3, **caractérisé en ce que** le procédé de transfert numérique est un procédé d'accès multiple à division temporelle (TDMA - "Time Division Multiple Access") et en particulier un système GSM.

6. Procédé selon les revendications précédentes, **caractérisé en ce que** les applications (1) sont des X-lets à base java.

7. Procédé selon l'une des revendications précédentes, **caractérisé en ce que** les terminaux (4) sont une radio, en particulier une autoradio, un appareil de navigation, un ordinateur de poche portable, en particulier un assistant numérique personnel (PDA - "Personal Digital Assistant"), un téléphone mobile ou un ordinateur personnel (PC - "Personal Computer").

8. Procédé selon l'une des revendications précédentes, **caractérisé en ce que** le flux de données est un flux de données de transport d'objets multimédia (MOT - "Multimedia Object Transport").
